# FASCICULE DE BREVET EUROPEEN

(11) **EP 2 222 487 B1**
(45) Date de publication et mention de la délivrance du brevet: **31.08.2011**
(21) Numéro de dépôt: 08872329.1
(22) Date de dépôt: 11.12.2008
(51) Int. Cl.: B60D 1/06, B60D 1/28, B60D 1/52

(54) **DISPOSITIF DE DEVERROUILLAGE D'UN ATTELAGE A ROTULE**
VORRICHTUNG ZUR ENTRIEGELUNG EINER KUGELKUPPLUNG
DEVICE FOR UNLOCKING A BALL HITCH

(30) Priorité: 19.12.2007 FR 0708908
(43) Date de publication de la demande: 01.09.2010
(73) Titulaire: Coutier Industrie S.A.R.L., 57970 Basse Ham (FR)
(72) Inventeur: COUTIER, Charles, F-57570 Cattenom (FR)
(74) Mandataire: Robert, Jean-Pierre
(86) Numéro de dépôt international: PCT/FR2008/001724
(87) Numéro de publication internationale: WO 2009/101303

(56) Documents cités:
- DE-A1- 2 105 668
- DE-C1- 3 929 752
- DE-U1- 9 113 527
- FR-A- 2 886 216

## Description

La présente invention concerne un dispositif pour verrouiller et déverrouiller une rotule d'attelage, portée par un véhicule d'un train de véhicules, dans une tête d'accrochage portée par un véhicule adjacent de ce train et comprenant une cage de rotule dont une partie est constituée par un évidement partiellement sphérique d'une mâchoire escamotable sous l'action d'un levier pivotant.

### ARRIERE PLAN DE L'INVENTION

On connaît plusieurs dispositifs de ce genre depuis de fort nombreuses années. Ils comportent pour la plupart une came pivotante soumise à l'action d'un ressort et interposée entre la mâchoire et le levier, le ressort précité étant enroulé de façon à solliciter la came dans le sens correspondant au blocage de la mâchoire contre la rotule. Ce ressort est enroulé autour de l'axe de pivotement de la came et une de ses extrémités agit sur la came tandis que son autre extrémité prend appui contre une paroi de la tête d'accrochage. Dans la cas où la mâchoire est escamotable par pivotement dans la cage, un second ressort est enroulé autour de l'axe de pivotement de la mâchoire avec une de ses extrémités qui prend appui contre la face intérieure du sommet de la tête d'accrochage alors que son autre extrémité agit sur une partie de la mâchoire de façon à solliciter cette mâchoire en direction de sa position de déblocage.

Dans la plupart des réalisations connues, la came pivotante est manoeuvrée à l'encontre de son ressort de rappel par une poignée extérieure à la cage de rotule, qui est pivotante autour d'un axe porté par cette cage. L'axe de pivotement de la poignée est en général parallèle à l'axe de pivotement de la came. On citera par exemple le document FR 2 378 644 pour illustrer une réalisation dans laquelle les axes de la poignée et de la came sont confondus et sensiblement orthogonaux à l'axe de pivotement de la mâchoire. Dans d'autres dispositifs, comme en particulier dans celui du document DE2105668 qui divulgue toutes les caractéristiques du préambule de la revendication 1, les axes sont parallèles.

La poignée de dételage est à manoeuvre manuelle. Dans pratiquement tous les cas, l'altitude de l'attelage à sphère est faible si bien qu'une intervention demande à l'opérateur de se baisser. Cela n'est pas gênant lorsque l'attelage ou/et le dételage sont occasionnels. Dans le cas de véhicules qui sont constitués par des chariots d'atelier appelés également bases roulantes, dans les ateliers de montage de l'industrie automobile par exemple, ces chariots sont constitués en train pour leur transport entre une station de chargement et différentes stations de service le long d'une ligne de montage où ils sont laissés comme magasins des pièces à assembler sur la ligne. C'est donc à longueur de journée que le conducteur du train de chariots ou un servant doit atteler et dételer les bases. L'ergonomie des opérations à réaliser au niveau du sol est alors très mauvaise. C'est dans cette application de l'attelage à boule que l'invention entend remédier aux inconvénients engendrés par la manoeuvre manuelle des poignées.

### OBJET DE L'INVENTION

A cet effet, la présente invention a donc pour objet un dispositif pour verrouiller et déverrouiller la liaison d'une rotule d'attelage portée par un véhicule d'un train de véhicules et d'une tête d'accrochage portée par un véhicule adjacent de ce train et comprenant :
- une cage de rotule définie par un boîtier et une mâchoire escamotable par pivotement autour d'un premier axe intérieur du boîtier, en réponse à l'action d'un levier pivotant,
- un premier ressort enroulé autour de l'axe de pivotement de la mâchoire avec une de ses extrémités qui prend appui contre la face intérieure du sommet du boîtier alors que son autre extrémité agit sur une partie de la mâchoire de façon à rappeler cette mâchoire en direction de sa position de déblocage,
- une came pivotante dans le boîtier autour d'un deuxième axe intérieur du boîtier, soumise aux actions antagonistes d'un deuxième ressort et du levier lorsqu'il est sollicité, le ressort susdit étant enroulé autour de ce deuxième axe de pivotement de façon à rappeler la came dans le sens correspondant au blocage de la mâchoire contre la rotule,
- le levier susdit étant articulé autour d'un troisième axe du boîtier et comporte une première section, interne au boîtier, pivotante entre une première position dans laquelle cette première section est inactive et une deuxième position dans laquelle, par contact avec la came, elle maintient cette came dans une position éloignée de celle prise sous l'effet du deuxième ressort de rappel, - caractérisé en ce que le levier comporte une deuxième section, externe au boîtier, en forme de pédale dont la forme et la position dans le dispositif sont tels que le passage de la première section du levier de sa première position à sa deuxième position correspond à un déplacement de la pédale de haut en bas.

Grâce à cette structure du levier, le dételage de la liaison peut être obtenu par une pression du pied de l'opérateur ce qui lui évite de se pencher ou de se baisser pour déverrouiller l'attelage.

Selon une deuxième caractéristique de l'invention, la mâchoire sous la sollicitation de son ressort de rappel constitue un cliquet de blocage de la came dans ladite position éloignée.

Cette particularité permet à l'opérateur de conserver la mâchoire dans sa position escamotée ou d'ouverture si bien que l'attelage consiste à réintroduire la rotule dans la tête d'accrochage, ce qui ramène déplace la mâchoire à l'encontre de l'effet de son ressort de rappel dans une position ou son rôle de cliquet de retenue de la came disparaît. Cette dernière, sous l'effet de son ressort de rappel, revient dans sa position de blocage de la mâchoire contre la rotule.

L'invention concerne également un véhicule pourvu d'un timon d'attelage porteur à l'une de ses extrémités de la tête d'attelage définie ci-dessus et monté pivotant sur ce véhicule par son autre extrémité, autour d'un axe horizontal, caractérisé en ce que le véhicule comporte un moyen de rappel du timon en pivotement vers le haut, autour de son axe horizontal d'articulation.

Cette disposition complémentaire de l'invention permet un dételage automatique de la liaison dès que l'opérateur cesse son action sur la pédale lorsque l'attelage est réalisé par approche descendante de la tête d'accrochage sur la rotule.

Dans le cas où l'attelage est réalisé par approche en montant de la tête d'accrochage vers la rotule qui dans ce cas est tournée vers le bas, la pédale affectera la forme d'un étrier avec une traverse située du côté de l'ouverture d'entrée de la tête d'attelage qui dans ce cas est tournée vers le haut.

On notera enfin que le dispositif de l'invention peut se monter sur une tête d'accrochage coopérant avec une masselotte de verrouillage conforme au document FR 2 843 563, la pédale comportant alors un bec avant qui constitue un moyen d'effacement de la masselotte au moment de l'enfoncement de la pédale.

D'autres caractéristiques et avantages de l'invention ressortiront de description de quelques exemples de réalisation donnés ci-après à titre purement indicatif.

### BREVE DESCRIPTION DES DESSINS

Il sera fait référence aux dessins annexés parmi lesquels :
- la figure 1 illustre, par une vue en coupe, un premier mode de réalisation du dispositif de liaison de l'invention dans son état verrouillé,
- la figure 2 illustre ce même dispositif ans l'état déverrouillé de la liaison
- la figure 3 illustre une variante de réalisation de la réalisation des figures précédentes dans son état verrouillé,
- la figure 4 illustre partiellement un train de chariots au niveau de la liaison de deux chariots successifs.

### DESCRIPTION DETAILLE DE L'INVENTION

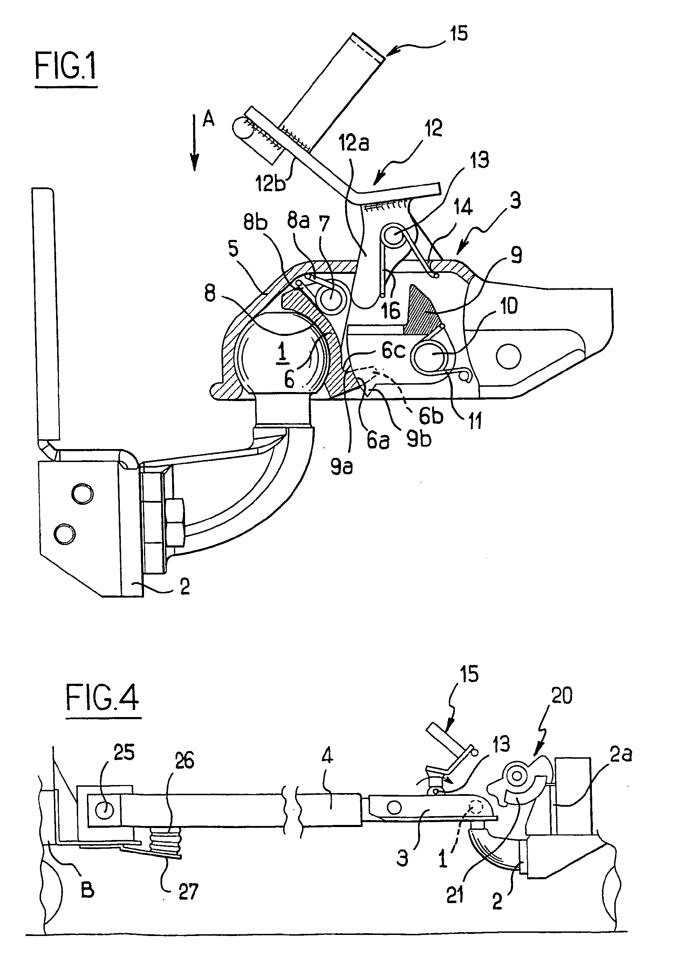

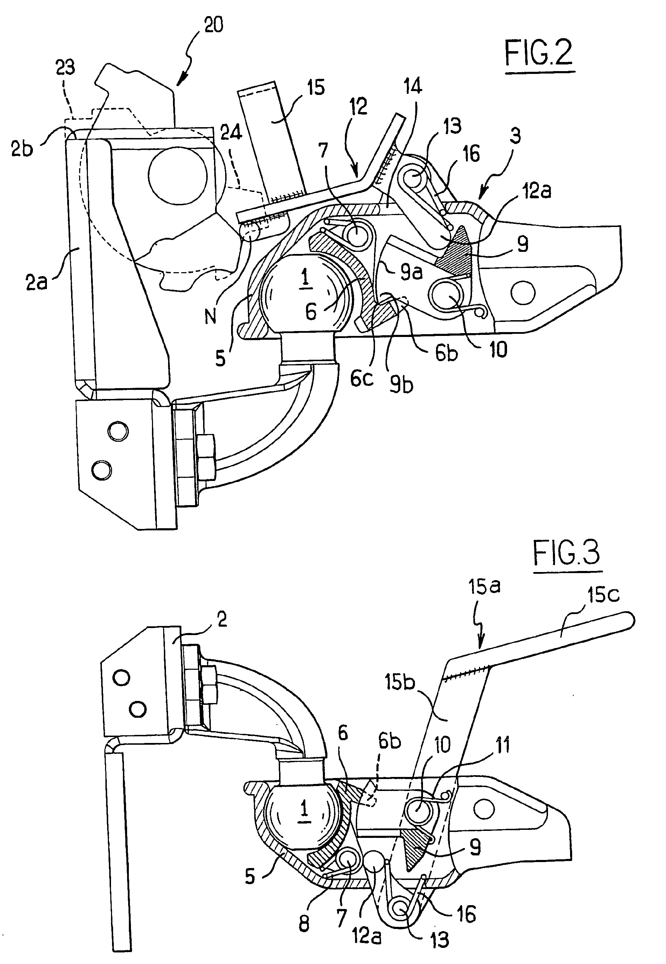

Aux figures 1 et 2, on a représenté un attelage par coopération d'une rotule 1, portée par l'arrière d'un véhicule (chariot d'atelier ou base roulante,...) au moyen d'une platine 2 et d'une tête d'accrochage 3 solidaire de l'extrémité libre d'un timon 4 (voir figure 4).

La tête d'accrochage 3 comprend :
- une cage pour accueillir la rotule 1, définie par un boîtier 5 et une mâchoire 6 escamotable par pivotement autour d'un premier axe 7 intérieur du boîtier 5,
- un premier ressort 8 enroulé autour de l'axe 7 de pivotement de la mâchoire 6 avec l'une 8a de ses extrémités qui prend appui contre la face intérieure du sommet du boîtier 5 alors que son autre extrémité 8b agit sur une partie de la mâchoire 6 de façon à rappeler cette mâchoire en direction d'une position de déblocage, c'est-à-dire dans le sens d'une rotation contraire à celle des aiguilles d'une montre aux figures 1 et 2,
- une came 9 pivotante dans le boîtier 5 autour d'un deuxième axe 10 intérieur du boîtier 5, soumise à l'action d'un deuxième ressort 11, le ressort 11 étant enroulé autour de ce deuxième axe 10 de pivotement de façon à rappeler la came 9 dans le sens correspondant au blocage de la mâchoire 6 contre la rotule 1.

La surface d'appui de la came 9 sur la mâchoire 6 est notée 9a sur les figures 1 et 2. Pour des questions de masse des organes mis en jeu, la came affecte la forme avec un évidement 9b entre deux ailes. De même la mâchoire 6 possède un dos tourné vers la came 9 qui porte une surface 6a sur laquelle frotte la surface 9a de la came. Des ailes latérales 6b de la mâchoire encadrent les ailes de la came 9.

La surface active 9a de la came 9 est de préférence de profil en spirale de sorte que plus la came tourne dans le sens des aiguilles d'une montre et plus elle repousse la mâchoire 6 contre la rotule 1.

Un levier 12 est articulé autour d'un troisième axe 13 du boîtier 5 mais situé à l'extérieur de ce dernier. Ce levier comporte une première section 12a, interne au boîtier 5 dans lequel il pénètre par une ouverture 14. Cette section 12a est pivotante entre une première position dans laquelle elle est inactive par rapport à la came 9 et une deuxième position dans laquelle, par contact avec cette came 9, elle la maintient dans une position éloignée de celle prise naturellement sous l'effet du deuxième ressort de rappel 11. Le levier 12 possède une deuxième section 12b, externe au boîtier, en forme de ou portant une pédale 15 dont la géométrie et la position dans le dispositif sont tels que le passage de la première section 12a du levier de sa première position à sa deuxième position correspond à un déplacement de la pédale de haut en bas selon la flèche A sur la figure 1.

Un ressort 16, enroulé autour de l'axe 13 est bandé entre un bord de l'ouverture 14 et la partie 12a du levier 12 de manière à le rappeler dans le sens des aiguilles d'une montre autour de l'axe 13.

On comprend, au vu de ces figures, que l'enfoncement de la pédale 15 provoque une rotation de la section 12a du levier 12 telle que la came 9 est entraînée en rotation dans le sens horaire jusqu'à ce que la surface 6b de la mâchoire 6 échappe de la surface 9b de la came 9. La mâchoire prend alors la position représentée à la figure dans laquelle l'étreinte de la rotule 1 est relâchée et la tête d'accrochage peut être séparée de la rotule. Dans cette position, la came 9 est encliquetée dans la partie arrière de la mâchoire 6 (logement des becs 9b de la came 9 dans l'angle rentrant 6c de la mâchoire 6) qui la retient dans cette position même si le levier 12a est relâché, donc ramené dans sa position de la figure 1 sous l'effet du ressort 16, parce que le couple exercé sur la mâchoire 6 par le ressort 8 est plus important que celui contraire, exercé par le ressort 11 sur la came 9.

Le réenclenchement de la liaison s'opère par la simple introduction de la rotule 1 dans la cage de la tête d'accrochage 3 qui fait tourner la mâchoire dans le sens horaire. Les becs 9c de la came échappent alors de l'angle 6b et la came peut reprendre appui sur la surface 6a de la mâchoire par sa surface active 9a et bloquer la mâchoire contre la rotule.

On aura noté à la figure 2 un équipement supplémentaire de la liaison en la présence d'un loquet 20 à masselotte, semblable à celui décrit dans le document FR 2 843 563.

Ainsi la platine 2 comporte une extension supérieure 2a qui porte un palier pour un axe d'articulation 21 du loquet à masselotte 20. La masselotte 22 de ce loquet lui confère une position stable autour de son axe d'articulation 21 dans laquelle l'une des extrémités (bec) 23 du loquet repose sur le bord supérieur 2b de l'extension 2a de la platine 2. A l'opposé du bec 23 du loquet 20, ce dernier comporte une extension 24 qui s'étend au-dessus du boîtier 5 coiffant la rotule d'attelage. Ainsi, si la mâchoire 6 vient à se rompre ou à lâcher, ce boîtier ne peut pas se dégager de la rotule vers le haut car il rencontre l'extension 24 du loquet 20 qui ne peut pas tourner autour de l'axe 9 puisqu'il est en butée contre le rebord 2b de l'extension 2a la platine 2.

A la figure 2, le loquet est représenté en traits interrompus dans sa position de service, c'est-à-dire dans sa position de verrouillage de sécurité de la liaison. Dans cette position, le loquet forme une butée pour le boîtier qui viendrait à échapper à la rotule ; il ne peut pas en effet, être effacé par rotation autour de l'axe 21 car le bec 23 est en appui sur le rebord 2b. En traits pleins, il est représenté repoussé par le nez N de la pédale 15 enfoncée, ce qui libère le boîtier 5 qui peut être soulevé de la rotule sans être intercepté par le loquet.

La figure 4 représente un timon 4 équipé, à une extrémité 4a de la tête d'accrochage 3 avec sa pédale 15. On y retrouve la plupart des éléments déjà décrits avec les mêmes références. L'autre extrémité 4b du timon est articulée au châssis B d'une base roulante autour d'un axe horizontal 25. Le timon écrase un tampon de caoutchouc 26 qui fait saillie au-delà de la base B et qui est porté par une lame de ressort 27 représentée fléchie. On comprend que le déblocage de la liaison par l'action de la pédale relâche la contrainte en compression du tampon et celle en flexion de la lame si bien que le timon est repoussé vers le haut pour accompagner le pied qui se retire de la pédale et libérer la liaison.

La figure 3 enfin illustre une variante de réalisation des figures 1 et 2 dans laquelle la rotule 1 est tournée vers le bas et la tête d'accrochage 3 est tournée vers le haut de sorte que l'approche de l'une vers l'autre se fait de bas en haut. Dans ce cas de figure, la pédale 15a est en forme d'étrier dont les branches 15b encadrent la tête d'accrochage 3 à partir de l'axe 13 de son articulation sur le boîtier 5 et la traverse 15c se trouve au dessus de la tête 3 de manière à être manoeuvrée de haut en bas par le pied de l'utilisateur. C'est d'ailleurs ce mouvement qui, poursuivi, aboutit à la séparation de la liaison.

## Revendications

1. Dispositif pour verrouiller et déverrouiller la liaison d'une rotule (1) d'attelage portée par un véhicule d'un train de véhicules et d'une tête d'accrochage (3) portée par un véhicule adjacent de ce train et comprenant :
- une cage de rotule définie par un boîtier (5) et une mâchoire (6) escamotable par pivotement autour d'un premier axe (7) intérieur du boîtier (5), en réponse à l'action d'un levier pivotant (12),
- un premier ressort (8) enroulé autour de l'axe (7) de pivotement de la mâchoire (6) avec une de ses branches (8a) qui prend appui contre la face intérieure du sommet du boîtier (5) alors que son autre branche (8a) agit sur une partie de la mâchoire (6) de façon à rappeler cette mâchoire en direction de sa position de déblocage,
- une came (9) pivotante dans le boîtier (5) autour d'un deuxième axe (10) intérieur du boîtier, soumise aux actions antagonistes d'un deuxième ressort (11) et du levier (12) lorsqu'il est sollicité, le ressort (11) susdit étant enroulé autour de ce deuxième axe (10) de pivotement de façon à rappeler la came (9) dans le sens correspondant au blocage de la mâchoire (6) contre la rotule (1),
- le levier (12) susdit étant articulé autour d'un troisième axe (13) du boîtier (5) et comporte une première section (12a), interne au boîtier, pivotante entre une première position dans laquelle cette première section est inactive et une deuxième position dans laquelle, par contact avec la came (9), elle maintient cette came dans une position éloignée de celle prise sous l'effet du deuxième ressort (11) de rappel, **caractérisé en ce que** le levier comporte une deuxième section (12b), externe au boîtier (5), en forme de pédale (15) dont la géométrie et la position dans le dispositif sont tels que le passage de la première section du levier (12) de sa première position à sa deuxième position correspond à un déplacement (A) de la pédale de haut en bas.

2. Dispositif selon la revendication 1, **caractérisé en ce que** la mâchoire (6) sous la sollicitation de son ressort de rappel (8) constitue un cliquet de blocage de la came (9) dans ladite position éloignée.

3. Dispositif selon l'une des revendications précédentes, **caractérisé en ce que**, l'attelage étant réalisé par approche en montant de la tête d'accrochage (3) vers la rotule (1) qui dans ce cas est tournée vers le bas, la pédale (15a) affectera la forme d'un étrier avec une traverse (15c) située du côté de l'ouverture d'entrée de la tête d'accrochage qui dans ce cas est tournée vers le haut.

4. Dispositif selon l'une des revendications précédentes, **caractérisé en ce qu'**il comporte un loquet (20) à masselotte de sécurité pour la liaison et ne ce que la pédale (15) comporte un nez (N) qui repousse le loquet lors de son déplacement par rapport au boîtier (5).

5. Véhicule (B) pourvu d'un timon (4) d'attelage porteur à l'une de ses extrémités (4a) de la tête (3) d'accrochage comprenant un dispositif selon la revendication 1 ou la revendication 2, et monté pivotant sur ce véhicule (B) par son autre extrémité (4b), autour d'un axe horizontal (25), **caractérisé en ce que** le véhicule (B) comporte un moyen (26,27) de rappel du timon (4) en pivotement vers le haut, autour de son axe horizontal (25) d'articulation.

## Claims

1. A device for locking and unlocking the connection of a coupling ball (1) carried by a vehicle of a vehicle train and an attachment head (3) carried by an adjacent vehicle of the train, the device comprising:
a ball cage defined by a housing (5) and a jaw (6) that is retractable by pivoting about a first pin (7) inside the housing (5) in response to action on a pivotally-mounted lever (12);
a first spring (8) wound around the pin (7) on which the jaw (6) pivots, with one of the branches (8a) of the spring bearing against the inside face of the top of the housing (5), while its other branch (8b) acts on a portion of the jaw (6) so as to urge the jaw towards its unblocking position;
a cam (9) pivotally mounted in the housing (5) about a second pin (10) inside the housing, the cam being subjected to the opposing actions of a second spring (11) and of the lever (12) when the lever is operated, the above-mentioned spring (11) being wound around said second pivot pin (10) so as to urge the cam (9) in the direction corresponding to blocking the jaw (6) against the ball (1);
the above-mentioned lever (12) being hinged about a third pin (13) of the housing (5) and including a first section (12a) inside the housing mounted to pivot between a first position in which said first section is inactive, and a second position in which it comes into contact with the cam (9) and holds the cam in a position spaced apart from the position taken under the effect of the second return spring (11);
the device being **characterized in that** the lever includes a second section (12b) external to the housing (5) in the form of a pedal (15) of shape and position in the device that are such that the first section of the lever (12) passing from its first position to its second position corresponds to moving (A) the pedal downwards.

2. A device according to claim 1, **characterized in that** the jaw (6) under drive from its return spring (8) constitutes a pawl for blocking the cam (9) in said spaced-apart position.

3. A device according to any preceding claim, **characterized in that** for coupling being achieved by raising the attachment head (3) towards the ball (1), which is then directed downwards, the pedal (15a) is in the form of a fork with a handle (15c) situated on the same side as the inlet opening in the attachment head, which under such circumstances faces upwards.

4. A device according to any preceding claim, **characterized in that** it includes a safety flyweight latch (20) for the connection, and **in that** the pedal (15) includes a tip (N) that pushes away the latch on moving relative to the housing (5).

5. A vehicle (B) provided with a coupling drawbar (4) carrying at one of its ends (4a) the attachment head (3) including a device according to claim 1 or claim 2, the drawbar being pivotally mounted on the vehicle (B) via its other end (4b) about a horizontal pin (25), the vehicle (B) being **characterized in that** it includes return means (26, 27) for pivoting the drawbar (4) upwards about its horizontal hinge pin (25).

## Patentansprüche

1. Vorrichtung zum Verriegeln und Entriegeln der Verbindung einer Kupplungskugel (1), die von einem Fahrzeug eines Fahrzeugzuges getragen wird, und eines Kupplungskopfes (3), der von einem angrenzenden Fahrzeug dieses Zuges getragen wird und umfasst:
- einen Kugelkäfig, der durch ein Gehäuse (5) und eine Backe (6) definiert ist, die durch ein Verschwenken um eine im Inneren des Gehäuses (5) befindliche erste Achse (7) in Reaktion auf die Einwirkung eines Schwenkhabels (12) ausrückbar ist,
- eine erste Feder (8), die um die Schwenkachse (7) der Backe (6) gewickelt ist, wobei einer ihrer Schenkel (8a) an der Innenseite der Spitze des Gehäuses (5) anliegt, während ihr anderer Schenkel (8a) derart auf einen Abschnitt der Backe (6) einwirkt, dass diese Backe in Richtung ihrer Freigabeposition rückgestellt wird,
- eine in dem Gehäuse (5) um eine im Inneren des Gehäuses befindliche zweite Achse (10) schwenkbar gelagerte Nocke (9), die den entgegenwirkenden Kräften einer zweiten Feder (11) und des Hebels (12) ausgesetzt ist, wenn dieser beansprucht wird, wobei die oben genannte Feder (11) um diese zweite Schwenkachse (10) derart gewickelt ist, dass sie die Nocke (9) in die Richtung rückstellt, die der Blockierung der Backe (6) an der Kugel (1) entspricht,
- wobei der oben genannte Hebel (12) um eine dritte Achse (13) des Gehäuses (5) angelenkt ist und einen im Inneren des Gehäuses befindlichen ersten Abschnitt (12a) umfasst, der zwischen einer ersten Position, in der dieser erste Abschnitt inaktiv ist, und einer zweiten Position schwenkbar gelagert ist, in der er durch den Kontakt mit der Nocke (9) diese Nocke in einer Position halt, die von der entfernt ist, die sie unter der Wirkung der zweiten Rückstellfeder (11) einnimmt, **dadurch gekennzeichnet, dass** der Hebel einen aul3erhalb des Gehäuses (5) befindlichen zweiten Abschnitt (12b) in Form eines Pedals (15) umfasst, dessen Geometrie und Position in der Vorrichtung derart sind, dass der Übergang des ersten Abschnittes des Hebels (12) von seiner ersten Position in seine zweite Position einer Bewegung (A) des Pedals von oben nach unten entspricht.

2. Vorrichtung nach Anspruch 1, **dadurch gekennzeichnet, dass** die Backe (6) unter der Beanspruchung ihrer Rückstellfeder (8) eine Sperrklinke zum Blockieren der Nocke (9) in der genannten entfernten Position bildet.

3. Vorrichtung nach einem der vorhergehenden Ansprüche, **dadurch gekennzeichnet, dass** die Kopplung durch eine aufwärts gerichtete Annäherung des Kupplungskopfes (3) zur Kugel (I) erfolgt, die in diesem Fall nach unten gedreht ist, wobei das Pedal (15a) die Form eines Bügels mit einem Querschenkel (15c) aufweist, der sich auf der Seite der Zugangsöffnung des Kupplungskopfes befindet, der in diesem Fall nach oben gedreht ist.

4. Vorrichtung nach einem der vorhergehenden Ansprüche, **dadurch gekennzeichnet, dass** sie eine Sicherheits-Fallklinke (20) mit Stellgewicht für die Verbindung umfasst und dass das Pedal (15) eine Nase (N) umfasst, die die Fallklinke bei seiner Bewegung relativ zum Gehäuse (5) zurückdrückt.

5. Fahrzeug (B), das mit einer Anhängerdeichsel (4) versehen ist, die an einem ihrer Enden (4a) den Kupplungskopf (3) trägt, der eine Vorrichtung nach Anspruch 1 oder Anspruch 2 umfasst, und die über ihr anderes Ende (4b) an diesem Fahrzeug (B) schwenkbar um eine horizontale Achse (25) gelagert ist, **dadurch gekennzeichnet, dass** das Fahrzeug (B) Mittel (26, 27) zum schwenkbaren Rückstellen der Deichsel (4) nach oben um ihre horizontale Gelenkachse (25) umfasst.
